# EUROPEAN PATENT APPLICATION

(11) **EP 2 774 800 A1**
(43) Date of publication of application: **10.09.2014**
(21) Application number: 14157286.7
(22) Date of filing: 28.02.2014
(51) Int. Cl.: B60L 11/18, H02M 3/28, H02J 7/02

(54) **Power receiver and charging system**

(30) Priority: 07.03.2013 JP 2013045820
(71) Applicant: Kabushiki Kaisha Toshiba, Tokyo (JP)
(72) Inventor: Obayashi, Shuichi, Tokyo (JP); Otaka, Shoji, Tokyo (JP); Shijo, Tetsu, Tokyo (JP)
(74) Representative: Granleese, Rhian Jane

(57) **Abstract**

According to an embodiment, there is provided a power receiver including: a first rectifying circuit, a second rectifying circuit, a connecting part and a controller. The first rectifying circuit rectifies a first AC power generated by a first AC power generating device. The second rectifying circuit rectifies a second AC power generated by a second AC power generating device. The connecting part electrically connects an output terminal of the first rectifying circuit and an output terminal of the second rectifying circuit, in parallel. The controller performs a control such that the first AC power generating device and the second AC power generating device do not operate simultaneously.

## Description

### FIELD

Embodiments described herein relate to a power receiver and a charging system.

### BACKGROUND

For a charger having functions of wired charging and contactless charging, a configuration is known in which a power converting unit is shared for both charging. In this configuration, it is required to provide a relay or a switch for a high current between the power converting unit and power receiving units for both charging, in order to switch an input power to the power converting unit between the power receiving units. Such a relay or a switch provided on a line through which a high current flows is large and expensive.

### BRIEF DESCRIPTION OF THE DRAWINGS

FIG. 1 shows a charging system according to a first embodiment.
FIG. 2 shows another configuration example of the charging system according to the first embodiment.
FIG. 3 shows examples of PWM gate signals.
FIG. 4 shows a part of a charging system according to a second embodiment.

### DETAILED DESCRIPTION

According to an embodiment, there is provided a power receiver including: a first rectifying circuit, a second rectifying circuit, a connecting part and a controller.

The first rectifying circuit rectifies a first AC power generated by a first AC power generating device.

The second rectifying circuit rectifies a second AC power generated by a second AC power generating device.

The connecting part electrically connects an output terminal of the first rectifying circuit and an output terminal of the second rectifying circuit, in parallel.

The controller performs a control such that the first AC power generating device and the second AC power generating device do not operate simultaneously.

The present embodiments will be described in detail below with reference to the drawings.

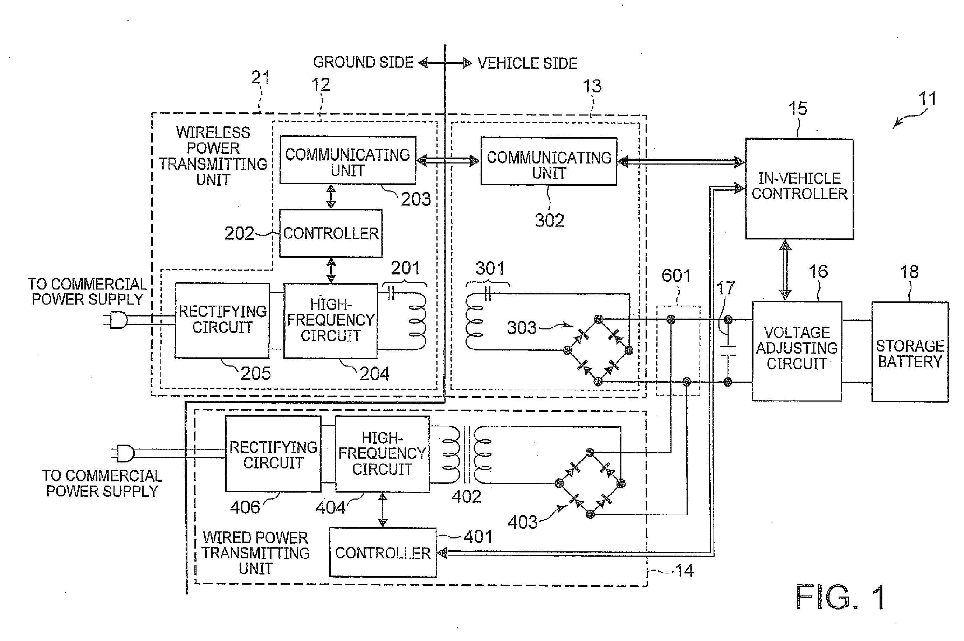

A charging system according to a first embodiment is shown in FIG. 1.

The charging system includes a power receiver 11 and a wireless power transmitting unit 12. The wireless power transmitting unit 12 is arranged on a ground side, and the power receiver 11 is arranged in a moving object such as a vehicle. Although, in the present embodiment, it is assumed that the moving object is an electric vehicle, other examples include plug-in hybrid vehicles, light rail trains, mobility scooters, electric wheelchairs, and mini EVs, for example.

The power receiver 11 includes a wireless power receiving unit 13, a wired power transmitting unit 14, an in-vehicle controller 15, a voltage adjusting circuit 16, an input capacitor 17, and a storage battery 18. The power receiver 11 can perform wired charging and contactless charging.

The wireless power transmitting unit 12 on the ground side and the wireless power receiving unit 13 on a vehicle side form a wireless power transmitting unit 21.

The wireless power transmitting unit 12 of the wireless power transmitting unit 21 includes a rectifying circuit 205, a high-frequency circuit (AC power generating unit) 204, a power transmitting coupler 201, a wireless-power-transmission-side controller 202, and a wireless-power-transmission-side communicating unit 203. The wireless power transmitting unit 12 corresponds to, for example, a first AC power generating device that generates a first AC power. The wireless power receiving unit 13 includes a wireless-power-reception-side communicating unit 302, a power receiving coupler 301, and a diode bridge (rectifying circuit) 303.

The wireless-power-transmission-side communicating unit 203 on the ground side performs wireless communications with the wireless-power-reception-side communicating unit 302 on the vehicle side. Any communication method is applicable thereto.

The rectifying circuit 205 in the wireless power transmitting unit 12 is connected to an external commercial power supply. The values of a frequency and a voltage of the commercial power supply are not specially limited, but they are a frequency of 50/60 Hz and a voltage of 100 V-240 V, for example. The rectifying circuit 205 generates a DC power from an AC power of the commercial power supply, and supplies the DC power to the high-frequency circuit 204.

The high-frequency circuit 204 converts a voltage and a frequency of the DC power supplied from the rectifying circuit 205 under the control of the wireless-power-transmission-side controller 202, to generate a high-frequency AC power. For example, an AC power such as of about several hundred volts and 100 kHz is generated. A storage battery of an electric vehicle is charged with a DC voltage of about 300 V-400 V, and the voltage value needs to be adjusted depending on the charging state of the battery. In contrast, a general commercial power supply of 50/60 Hz normally has an AC voltage of about 100 V or 200 V. Therefore, the high-frequency AC power of a high voltage of about several hundred volts is first generated by the high-frequency circuit 204. The high-frequency circuit 204 inputs the generated high-frequency AC power into the power transmitting coupler 201. A control method performed by the wireless-power-transmission-side controller 202 can employ, for example, a configuration in which a pulse-width modulation signal (pulse-width modulation gate signal) is input into the high-frequency circuit 204. In this configuration, it is possible to use an inverter circuit, as the high-frequency circuit 204, that receives the pulse-width modulation gate signal, and outputs a high voltage/high current power having a pulse width thereof.

The operation (On/Off) of the wireless-power-transmission-side controller 202 is controlled by receiving a command from the in-vehicle controller 15 through the wireless communications between the wireless-power-transmission-side communicating unit 203 and wireless-power-reception-side communicating unit 302.

The power transmitting coupler 201 generates a high-frequency electromagnetic field in accordance with the high-frequency AC power input from the high-frequency circuit 204, and wirelessly transmits the high-frequency AC power to the power receiving coupler 301 in a contactless manner.

The power receiving coupler 301 receives the high-frequency AC power from the power transmitting coupler 201, and outputs it to the diode bridge 303. The diode bridge 303 rectifies the high-frequency AC power from the power receiving coupler 301. An output power of the diode bridge 303 is input into the voltage adjusting circuit 16 via a connecting part 601. In addition, an input capacitor 17 is provided on the input side of the voltage adjusting circuit 16, as an input buffer. The diode bridge 303 needs to have a reverse breakdown voltage (i.e., power handling capability) sufficient to rectify a high-voltage power of about several hundred volts.

Here, the connecting part 601 electrically connects an output terminal of the diode bridge 303 and an output terminal of a diode bridge 403 (to be described) in a wired power transmitting unit 14, in parallel. The diode bridge 403 also needs to have a reverse breakdown voltage sufficient to rectify a high-voltage power of about several hundred volts. The output power of the diode bridge 303 is also applied to the output side of the diode bridge 403 via the connecting part 601, which however has no or very limited influence on a circuit preceding the diode bridge 403, by giving the sufficient reverse breakdown voltage to the diode bridge 403, even when the wireless power transmitting unit 21 operates.

The wired power transmitting unit 14 includes a rectifying circuit 406, a high-frequency circuit 404, a wired-side controller 401, an isolation transformer 402, and the diode bridge (rectifying circuit) 403. The rectifying circuit 406, the high-frequency circuit (AC power generating unit) 404, and the wired-side controller 401 form, for example, a second AC power generating device that generates a second AC power.

The rectifying circuit 406 is connected to an external commercial power supply. This may be done by, for example, a consumer inserting a plug into an outlet of the power supply. The values of a frequency and a voltage of the commercial power supply are not specially limited, but they are a frequency of 50/60 Hz and a voltage of 100 V-200 V, for example. The rectifying circuit 406 generates a DC power from an AC power of the commercial power supply, and supplies the DC power to the high-frequency circuit 404.

The high-frequency circuit 404 converts a frequency and a voltage of the DC power supplied from the rectifying circuit 406 under the control of the wired-side controller 401, to generate a high-frequency AC power. For example, a high-voltage AC power such as of 40 kHz and about several hundred volts is generated. A control method performed by the wired-side controller 401 can employ, for example, a configuration in which a pulse-width modulation gate signal is input into the high-frequency circuit 404. In this configuration, it is possible to use an inverter circuit, as the high-frequency circuit 404, that receives the pulse-width modulation gate signal, and outputs a high voltage/high current power having a pulse width thereof. The operation (On/Off) of the wired-side controller 401 is controlled by receiving a command from the in-vehicle controller 15.

The high-frequency circuit 404 outputs the generated high-frequency AC power to the diode bridge 403 via the isolation transformer 402 provided for preventing an accident such as an electric shock. The diode bridge 403 rectifies the input high-frequency AC power to output a DC power. The rectified DC power is input into the voltage adjusting circuit 16 via the connecting part 601. In addition, the input capacitor 17 is provided on the input side of the voltage adjusting circuit 16, as the input buffer. The power output from the diode bridge 403 is also applied to the side of the diode bridge 303 via the connecting part 601, which however has no or very limited influence on a circuit preceding the diode bridge 303, by giving the sufficient reverse breakdown voltage to the diode bridge 303 as described above. In particular, an induction field is not generated by the power receiving coupler because an AC voltage is not applied thereto.

Here, the in-vehicle controller 15 performs a control such that only one of the high-frequency circuit 204 of the wireless power transmitting unit 21 and the high-frequency circuit 404 of the wired power transmitting unit 14 generates a high-frequency power. That is, the control is performed such that the wireless power transmitting unit 21 and the wired power transmitting unit 14 do not operate simultaneously. This prevents the wireless power transmitting unit 21 and the wired power transmitting unit 14 from generating the high-frequency power simultaneously.

As a result, the rectified power is input into the voltage adjusting circuit 16 from only one of the wireless power transmitting unit 21 and the wired power transmitting unit 14. Here, as described above, with the diode bridge 303 and the diode bridge 403 each having a sufficient reverse breakdown voltage, even when either the wired power transmitting unit 14 or the wireless power transmitting unit 21 operates, there is no influence on the circuit on the side of the power transmitting unit that does not operate.

In such a manner, by making use of a reverse breakdown voltage of a diode used for rectification, a power receiver can be realized, without using a relay, which can perform the wired charging and the contactless charging in a selective manner. Moreover, by sharing a circuit (such as a voltage adjusting circuit) following the connecting part 601, the volume and the cost thereof can be reduced.

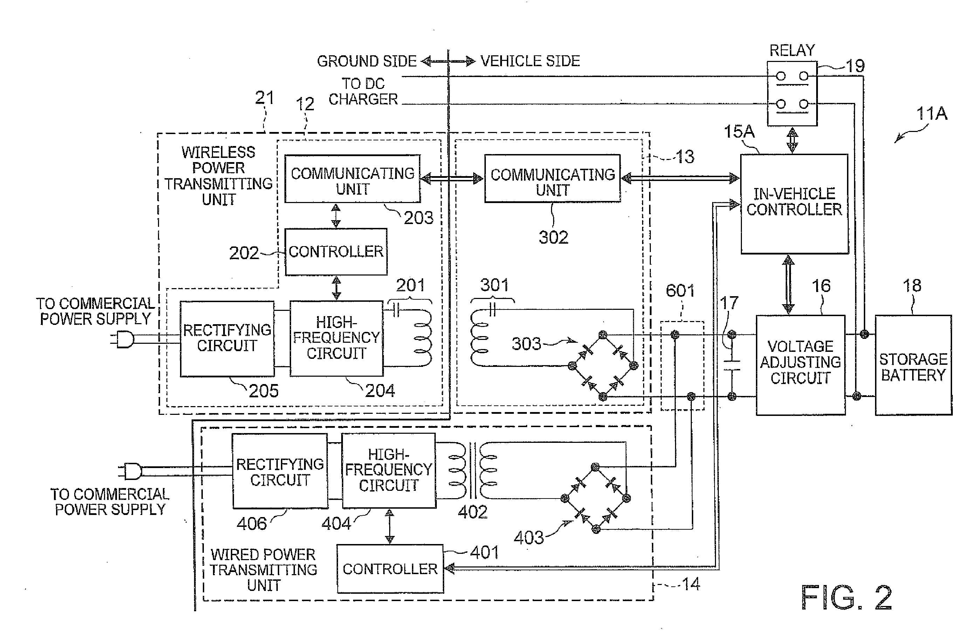

Another configuration example of the system of the present embodiment is shown in FIG. 2. A relay 19 is added to the vehicle side of FIG. 1. The relay 19 connects a DC charger on the ground side to the storage battery 18. The DC charger is, for example, a quick charger that supplies a high voltage such as of 400 V. An in-vehicle controller 15A controls charging from the DC charger to the storage battery 18, using the DC charger. In this case, the in-vehicle controller 15A performs a control such that the relay 19 is made connected (On) and both of the wireless power transmitting unit 21 and the wired power transmitting unit 14 do not operate.

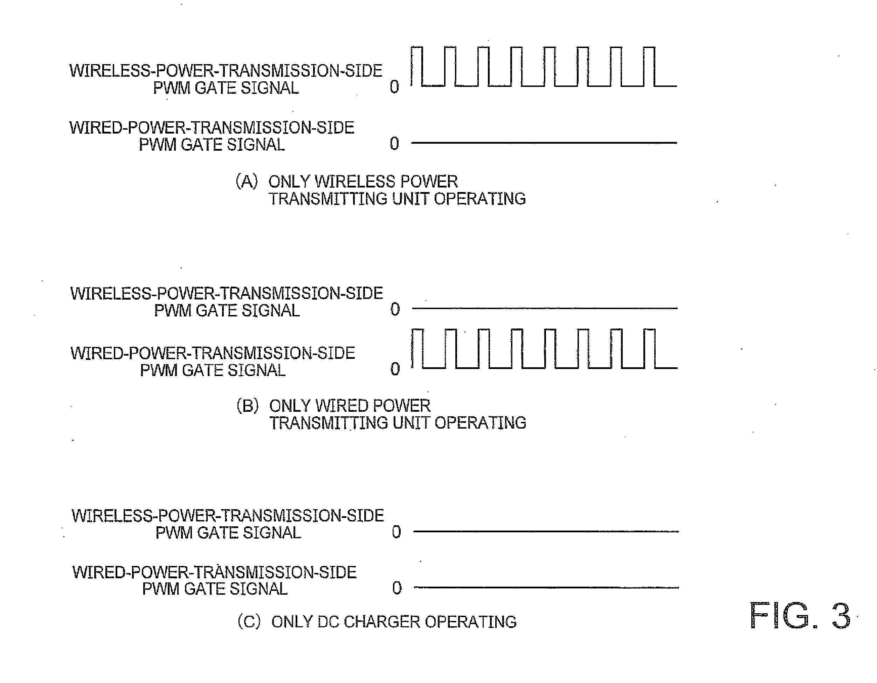

FIG. 3 shows examples of pulse-width modulation gate signals (PWM gate signals) generated by the wireless-power-transmission-side controller 202 and the wired-side controller 401. The wireless-power-transmission-side controller 202 and the wired-side controller 401 each include a pulse-width modulation gate signal generator (modulation signal generating unit) that generates the pulse-width modulation gate signal.

As shown in FIG. 3(A), to cause only the wireless power transmitting unit 21 to operate, the pulse-width modulation gate signal generator of the wireless-side controller 202 outputs the signal to the high-frequency circuit 204, and the pulse-width modulation gate signal generator of the wired-side controller 401 stops outputting the signal. This allows for a simultaneous operation prohibition control, using existing voltage controlling hardware as it is.

As shown in FIG. 3(B), to cause only the wired power transmitting unit 14 to operate, the pulse-width modulation gate signal generator of the wired-side controller 401 outputs the signal to the high-frequency circuit 404, and the pulse-width modulation gate signal generator of the wireless-power-transmission-side controller 202 stops outputting the signal. This allows for the simultaneous operation prohibition control, using the existing voltage controlling hardware as it is.

Further, as shown in FIG. 3(C), to cause only the DC charger shown in FIG. 2 to operate, both of the wireless-side controller 202 and the wired-side controller 401 stop outputting the signals.

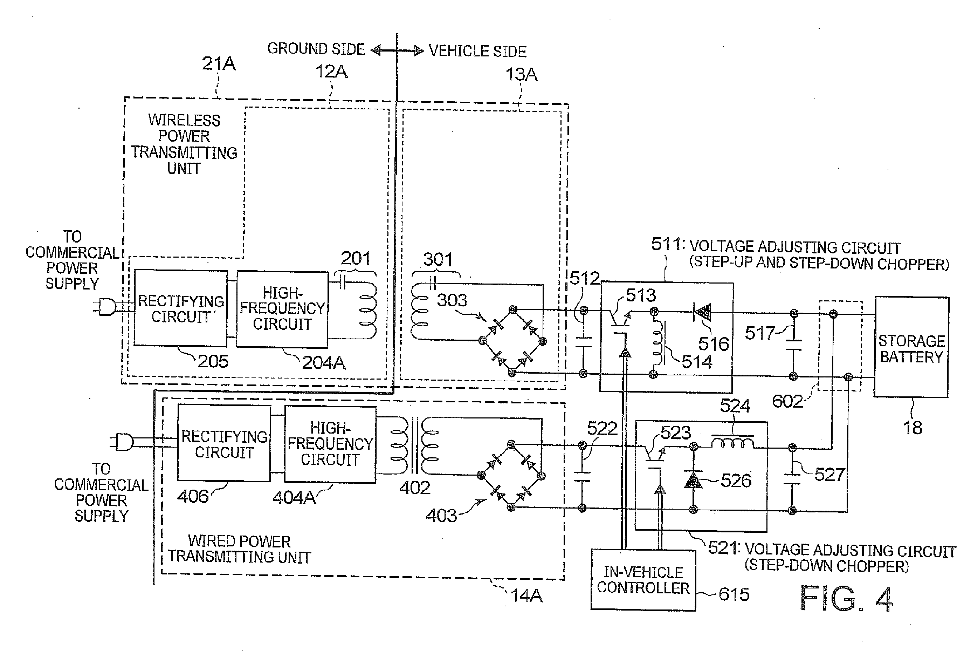

A charging system according to a second embodiment is shown in FIG. 4. The explanations similar to FIG. 1 will be omitted, and those different from FIG. 1 will be mainly described below.

Unlike the first embodiment, the wireless-power-transmission-side controller and the wireless-power-transmission-side communicating unit are not required, and therefore the wireless power transmitting unit 12A does not include them. However, the wireless power transmitting unit 12A may have a configuration including them. Likewise, the wireless-power-reception-side communicating unit is not required, and therefore the wireless power receiving unit 13A does not include the wireless-power-reception-side communicating unit. However, the wireless power receiving unit 13A may have a configuration including the wireless-power-reception-side communicating unit. Furthermore, likewise, the wired-side controller is not required, and therefore the wired power transmitting unit 14A does not include the wired-side controller. However, the wired power transmitting unit 14A may have a configuration including the wired-side controller. The power rectified by the diode bridge 303 on the side of the wireless power transmitting unit 21A is output to a voltage adjusting circuit 511 via an input capacitor 512. The power adjusted (stepped up or stepped down) by the voltage adjusting circuit 511 is supplied to the storage battery 18 via an input capacitor 517, through a connecting part 602. The storage battery 18 is charged based on the input power. As the voltage adjusting circuit 511, a step-up and step-down chopper that can both step up and step down a voltage is used. The reason is as follows: The positional relationship between the power transmitting coupler and the power receiving coupler may change depending on use conditions of the wireless power transmitting unit 21A. In this case, since an equivalent load condition changes, an appropriate output voltage or current of the high-frequency circuit 204A changes. As a result, a voltage of the power from the diode bridge 303 may significantly change. Therefore, to output an appropriate DC voltage to the storage battery 18, a step-up function may be required in addition to a step-down function. For this reason, the step-up and step-down chopper that can both step up and step down a voltage is used as the voltage adjusting circuit 511. Note that the shown step-up and step-down chopper is composed of an NMOS transistor 513, a coil 514, and a diode 516, but it is not limited to this configuration. The voltage adjusting circuit 511 receives, for example, a pulse-width modulation gate signal, and outputs a high-voltage power having a pulse width thereof.

The power rectified by the diode bridge 403 on the side of the wired power transmitting unit 14A is output to a voltage adjusting circuit 521 via an input capacitor 522. As the voltage adjusting circuit 521, a step-down chopper is used, which has a simpler configuration and is easier to achieve high-efficiency than the step-up and step-down chopper. The reason is as follows: A voltage of the commercial power supply input into the wired power transmitting unit 14A is stable and does not significantly change in general. Therefore, since changes in a voltage of the power from the diode bridge 403 are small, the voltage adjusting circuit 521 is often enough to have a step-down function to output an appropriate DC voltage to the storage battery. For this reason, the step-down chopper is used as the voltage adjusting circuit 521. Note that the shown step-down chopper is composed of an NMOS transistor 523, a diode 526, and a coil 524, but it is not limited to this configuration. The voltage adjusting circuit 521 receives, for example, a pulse-width modulation gate signal, and outputs a high-voltage power having a pulse width thereof.

The in-vehicle controller 615 performs a control such that only one of the voltage adjusting circuit 511 and the voltage adjusting circuit 521 operates, that is, such that the wireless power transmitting unit 21A and the wired power transmitting unit 14A do not operate simultaneously. With this control, the power is input into the storage battery 18 from only one of the wireless power transmitting unit 21A and the wired power transmitting unit 14A.

Here, the connecting part 601 electrically connects an output terminal of the voltage adjusting circuit 511 and an output terminal of the voltage adjusting circuit 521, in parallel. In this configuration, the diode bridges 303 and 403, and the voltage adjusting circuits 511 and 521 having sufficient reverse breakdown voltages need to be used. For example, they each need to have a reverse voltage tolerance sufficient to rectify a high-voltage power of about several hundred volts. With this, even when the voltage adjusting circuit 521 operates, that is, when the wired power transmitting unit 14A operates, there is no or limited influence on the circuit preceding the diode bridge 303. Furthermore, even when the voltage adjusting circuit 511 operates, that is, when the wireless power transmitting unit 21A operates, there is no or limited influence on the circuit preceding the diode bridge 403.

A method in which the in-vehicle controller 615 controls the voltage adjusting circuit 511 and the voltage adjusting circuit 521 can use a pulse-width modulation gate signal, as described above. To cause only the wireless power transmitting unit 21A to operate, the pulse-width modulation gate signal as shown in FIG. 3(A) is output to the voltage adjusting circuit 511. To cause only the wired power transmitting unit 14A to operate, the pulse-width modulation gate signal shown in FIG. 3(B) is output to the voltage adjusting circuit 521. This allows for the simultaneous operation prohibition control, using existing voltage controlling hardware as it is.

In addition, like the first embodiment, the charging system of the second embodiment can also have the configuration in which the storage battery 18 is charged from the DC charger via the relay. In this configuration, the in-vehicle controller 615 performs a control, only when the DC charger is used for the charging, such that the relay is connected and both of the wireless power transmitting unit 21A and the wired power transmitting unit 14A do not operate.

As described above, according to the present embodiment, a power receiver can be realized which can perform both of the wired charging and the contactless charging in a selective manner, without using a relay by performing the simultaneous operation prohibition control on the voltage adjusting circuit 511 and the voltage adjusting circuit 521, and by making use of a reverse breakdown voltage of a diode used for rectification.

Although the first and second embodiments show examples of switching between the wired charging and the contactless charging, the present invention is not limited to this. For example, the present invention can be applied to switching two types of wired charging, switching two types of contactless charging, or switching more than three types of charging.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A power receiver comprising:
a first rectifying circuit to rectify a first AC power generated by a first AC power generating device;
a second rectifying circuit to rectify a second AC power generated by a second AC power generating device;
a connecting part to electrically connect an output terminal of the first rectifying circuit and an output terminal of the second rectifying circuit, in parallel; and
a controller to perform a control such that the first AC power generating device and the second AC power generating device do not operate simultaneously.

2. The power receiver according to claim 1, comprising:
a power receiving coupler to wirelessly receive the first AC power from the first AC power generating device; and
the second AC power generating device,
wherein the second AC power generating device generates the second AC power by use of an external power supply.

3. The power receiver according to claim 2, further comprising a modulation signal generating unit to generate a pulse-width modulation signal, wherein
the external power supply supplies an AC power,
the second AC power generating device comprises:
a third rectifying circuit to rectify the AC power supplied from the external power supply; and
an AC power generating unit to modulate an output power of the third rectifying circuit based on the pulse-width modulation signal to thereby generate the second AC power, and
the controller controls the operation of the modulation signal generating unit.

4. The power receiver according to claim 1, further comprising a voltage adjusting circuit arranged following the connecting part, the voltage adjusting circuit to adjust a voltage of an output power of the first or second rectifying circuit that is input via the connecting part.

5. The power receiver according to claim 4, further comprising a storage battery charged with a power of the voltage adjusted by the voltage adjusting circuit.

6. The power receiver according to claim 1, wherein the first rectifying circuit and the second rectifying circuit each comprises a diode bridge.

7. A charging system comprising:
the power receiver of claim 1; and
the first AC power generating device, wherein
the first AC power generating device comprises:
a modulation signal generating unit to generate a pulse-width modulation signal;
a forth rectifying circuit to rectify an AC power supplied from an external power supply; and
an AC power generating unit to modulate an output power of the forth rectifying circuit based on the pulse-width modulation signal generated by the modulation signal generating unit to thereby generate the first AC power, and
the controller controls the operation of the second modulation signal generating unit.

8. The charging system according to claim 7, wherein
the first AC power generating device comprises a power transmitting coupler to wirelessly transmit the first AC power,
the power receiver comprises a power receiving coupler to wirelessly receive the first AC power from the power transmitting coupler, and
the first rectifying circuit rectifies the first AC power received by the power receiving coupler.

9. A power receiver comprising:
a first rectifying circuit to rectify a first AC power generated by a first AC power generating device;
a first voltage adjusting circuit to adjust a voltage of an output power of the first rectifying circuit;
a second rectifying circuit to rectify a second AC power generated by a second AC power generating device;
a second voltage adjusting circuit to adjust a voltage of an output power of the second rectifying circuit;
a connecting part to electrically connect an output terminal of the first voltage adjusting circuit and an output terminal of the second voltage adjusting circuit, in parallel; and
a controller to perform a control such that the first voltage adjusting circuit and the second voltage adjusting circuit do not operate simultaneously.

10. The power receiver according to claim 9, wherein
the controller supplies a pulse-width modulation signal to only one of the first voltage adjusting circuit and the second voltage adjusting circuit,
the first voltage adjusting circuit adjusts the voltage of an output power of the second rectifying circuit based on the pulse-width modulation signal supplied from the controller, and
the second voltage adjusting circuit adjusts the voltage of an output power of the second rectifying circuit based on the pulse-width modulation signal supplied from the controller.

11. The power receiver according to claim 9, further comprising a storage battery arranged following the connecting part and charged with an output power of the first or second voltage adjusting circuit that is input via the connecting part.

12. The power receiver according to claim 9, wherein the first rectifying circuit and the second rectifying circuit each comprises a diode bridge.
